# FASCICULE DE BREVET EUROPEEN

(11) **EP 0 335 803 B1**
(45) Date de publication et mention de la délivrance du brevet: **07.09.1994**
(21) Numéro de dépôt: 89400898.6
(22) Date de dépôt: 31.03.1989
(51) Int. Cl.: G09F 7/18, G09F 7/06, F16B 13/02, F16B 5/06

(54) **Dispositif de fixation de plaquettes-logos ou de marques sur un coffret ou une carrosserie**
Vorrichtung zum Befestigen von Logos- oder Markenschildern auf einen Kasten oder auf eine Karosserie
Device to fix logos- or markplates to a box or a carbody

(30) Priorité: 01.04.1988 FR 8804386
(43) Date de publication de la demande: 04.10.1989
(73) Titulaire: THOMSON TELEVISION ANGERS, 92400 Courbevoie (FR)
(72) Inventeur: Allaire, Christian, F-92045 Paris la Défense (FR); Huerre, Dominique, F-92045 Paris la Défense (FR)
(74) Mandataire: Ruellan-Lemonnier, Brigitte

(56) Documents cités:
- FR-A- 1 029 156
- FR-A- 2 053 385
- FR-A- 2 307 167
- GB-A- 2 047 452
- US-A- 3 916 756

## Description

La présente invention a pour objet un dispositif de fixation de plaquettes-logos ou de marques sur un coffret ou une carrosserie.

Pour fixer de façon automatique des plaquettes, telles que des plaquettes de marque, de logos ou d'identification sur un coffret d'appareil ou de machine ou sur une carrosserie d'automobile, on peut les visser, mais l'opération de vissage n'est pas facilement automatisable et nécessite des automates de manipulation de vis. La demande de brevet français 2 307 167 montre comment une plaquette est fixée sur une cloison avec une vis. Une autre technique pertinente sans l'utilisation des vis est divulguée par la demande de brevet britannique GB - A - 2 047 452. Encore une autre technique consiste à munir les plaquettes de pattes introduites dans des trous correspondants du coffret ou de la carrosserie. Si ces pattes sont en matière plastique, on les tord ou on écrase à chaud leurs extrémités ou on les bloque à l'aide de clips d'arrêt à languettes élastiques, et si elles sont métalliques, on les bloque également avec ces clips. Dans ce cas, on doit pouvoir accéder à la face intérieure du coffret ou de la carrosserie, ce qui n'est pas toujours aisé ou possible, et nécessite une manipulation supplémentaire (écrasement avec chauffage ou mise en place des clips ou torsion des pattes).

La présente invention a pour objet un dispositif de fixation sur une cloison de plaquettes du type précité, qui permette d'automatiser facilement la fixation de ces plaquettes sans nécessiter d'opération de vissage et d'accès à la face arrière de la cloison, et qui soit très économique. Ces plaquettes peuvent être en matière plastique ou en matière métallique (obtenues par exemple par refoulement de métal) tant que la matière de la cloison est plus molle que la leur.

Le dispositif de fixation de l'invention comporte au moins une broche de fixation pleine et rigide, cette broche comportant à la périphérie de sa base de fins ergots longitudinaux en une matière plus dure que celle de la cloison. Dans le cas où la plaquette doit être inclinée par rapport à la surface de la cloison sur laquelle elle doit être fixée, le dispositif de fixation peut comporter une plaquette intermédiaire en matière plastique formée avec au moins une patte solidaire de la plaquette intermédiaire, les extrémités de la patte étant conformées en au moins une languette d'encliquetage, cette patte comportant un trou dont le diamètre est sensiblement égal au diamètre de la broche.

La présente invention sera mieux comprise à la lecture de la description détaillée de deux modes de réalisation, pris comme exemples non limitatifs, et illustrés par le dessin annexé, sur lequel :
- la figure 1 est une vue en coupe partielle d'un dispositif de fixation de plaquette conforme à l'invention ;
- la figure 2 est une vue en coupe selon II-II d'une broche de la plaquette de la figure 1, et
- la figure 3 est une vue en coupe d'une variante d'un dispositif de fixation conforme à l'invention, d'une plaquette métallique.

L'invention est décrite ci-dessous en référence à la fixation d'une plaquette-logo sur la face avant d'un coffret d'appareil électrique ou électronique, mais il est bien entendu qu'elle n'est pas limitée à une telle application, et qu'elle peut être mise en oeuvre pour toute fixation automatisable rapide et simple d'un objet quelconque sur une cloison. Bien entendu, cet objet ne doit pas nécessiter une fixation très résistante (telle qu'une fixation par vissage pour des objets lourds et/ou encombrants), ce qui est le cas des plaquettes-logos et objets similaires.

La plaquette-logo 1 est en métal ou en matière plastique.

Pour la fixer contre une cloison 2, on la munit d'au moins une broche 3 qui peut être formée avec elle ou soudée dessus.

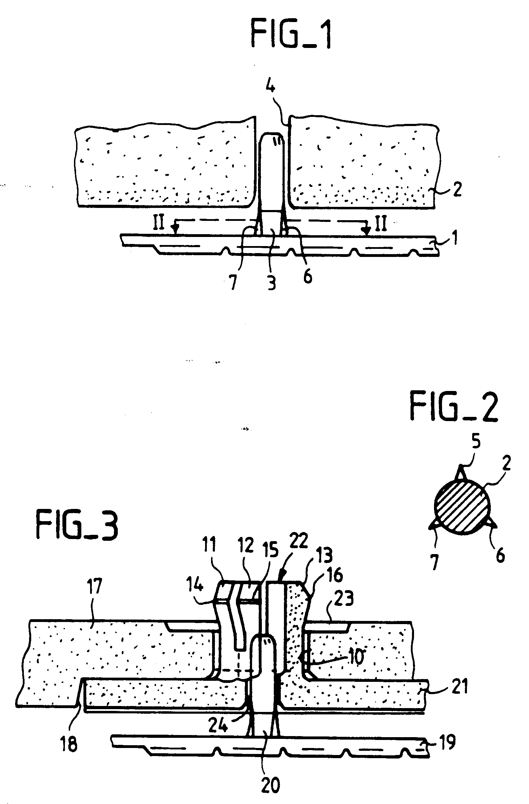

On pratique dans la cloison 2 un ou plusieurs trous tels que le trou 4, seul représenté en figure 1, en correspondance avec la ou les broches 3. Pour ancrer chaque broche 3 dans le trou 4 correspondant, on la munit, à sa base, d'ergots longitudinaux, par exemple au nombre de trois, référencés 5 à 7. Ces ergots sont par exemple en forme de très fines ailettes triangulaires, dont le sommet se situe à peu près à mi-longueur de la broche 3, et dont la base, au niveau de la plaquette 1 a une largeur d'environ 0,5 à 2 mm. La section droite (dans un plan perpendiculaire à l'axe de la broche 20) de ces ailettes a une forme sensiblement triangulaire. Lorsque l'on met en place les broches 3 dans les trous 4 correspondants, les ailettes s'enfoncent dans la matière de la cloison 2 bordant le trou 4, et s'y incrustent suffisamment pour maintenir fermement la plaquette 1 dans la cloison 2.

Pour retenir encore mieux les broches 3 dans les trous 4, on peut donner d'autres formes aux ergots de ces broches, par exemple en formant des dents sur leurs arêtes, les pointes de ces dents étant dirigées vers la cloison 2.

Le mode de réalisation de la figure 3 se rapporte à la fixation sur une cloison 17, comportant un lamage rectangulaire 18 dont le fond est parallèle à la face avant de la cloison 17, d'une plaquette-logo métallique 19, la plaquette 19 devant être inclinée par rapport à la cloison 17 pour être mieux vue. On munit la plaquette 19 de broches 20. Ces broches, qui sont au nombre d'au moins deux, peuvent être soit formées intégralement avec la plaquette 19, soit fixées par vissage ou soudage sur elle.

Afin de fixer la plaquette 19 sur la cloison 17, on utilise une plaquette intermédiaire 21 dont la face avant (celle sur laquelle est appliquée la face arrière de la plaquette 19) est inclinée par rapport à sa face arrière (celle appliquée sur le fond du lamage 18).

La plaquette intermédiaire 21 comporte au moins une patte telle que la patte 22, seule représentée en figure 3. La patte 22 a une forme générale de cylindre circulaire creux, et sa longueur est légèrement supérieure à l'épaisseur de la paroi 17 au niveau du lamage 18. Elle est fendue sur presque toute sa longueur, en partant de son extrémité libre selon trois fentes longitudinales. Les trois languettes 11,12,13 ainsi obtenues présentent sur leur face extérieure, près de leur extrémité libre, un léger renflement en forme de bourrelet périphérique 14,15,16 respectivement. Le diamètre extérieur de la patte 22 à sa base (c'est-à-dire près de la plaquette 19) est égal ou légèrement inférieur au diamètre du trou 10 pratiqué dans la plaquette intermédiaire 17 pour le passage de la patte 22. Le diamètre maximal des bourrelets 14 à 16 est légèrement supérieur au diamètre de ce trou 10. Ainsi, la patte 22 s'encliquète fermement dans le trou 10.

Pour chaque patte telle que la patte 22, la plaquette intermédiaire 21 comporte un trou 24 coaxial à la patte. Le diamètre du trou 24 est pratiquement égal au diamètre de la broche 20. Pour bien ancrer la broche 20 dans le trou 24, on la munit, à sa base, d'ergots longitudinaux, similaires à ceux de la broche 3 du mode de réalisation de la figure 1.

Bien entendu, les trous 24 ne sont pas obligatoirement pratiqués aux emplacements des pattes 22, mais peuvent être pratiqués à tout endroit des plaquettes 21 à condition que ces trous soient suffisamment profonds pour y faire passer les broches 20, ces trous pouvant même se prolonger dans la cloison 17.

## Revendications

1. Dispositif de fixation de plaquettes (1,19) sur une cloison (2,17), en particulier de plaquettes-logos ou plaquettes d'identification sur un coffret ou une carrosserie, ces plaquettes comportant au moins une broche de fixation (3, 20) pénétrant dans un trou (4, 24) correspondant de la cloison, caractérisé par le fait que cette broche est pleine et rigide, et comporte à la périphérie de sa base de fins ergots (25 à 27) longitudinaux en une matière plus dure que celle de la cloison.

2. Dispositif de fixation selon la revendication 1, caractérisé par le fait qu'il comporte une plaquette intermédiaire (21) en matière plastique formée avec au moins une patte à au moins une languette d'encliquetage, la plaquette intermédiaire comportant des trous (24) correspondant auxdites broches.

3. Dispositif selon la revendication 2, caractérisé par le fait que les trous de la plaquette intermédiaire sont formés dans l'axe des pattes.

## Patentansprüche

1. Vorrichtung zum Befestigen von Plaketten (1, 19) an einer Wand (2, 17), insbesondere von Logo-Plaketten oder Identifizierungsplaketten an einem Kasten oder einer Karosserie, wobei diese Plaketten wenigstens einen Befestigungsdorn (3, 20) aufweisen, der in ein entsprechendes Loch (4, 24) der Wand eindringt, dadurch gekennzeichnet, daß dieser Dorn massiv und starr ist und am Umfang seiner Basis dünne Längsvorsprünge (5 bis 7) aufweist, die aus einem härteren Material als dem der Wand bestehen.

2. Befestigungsvorrichtung nach Anspruch 1, dadurch gekennzeichnet, daß sie eine Zwischenplakette (21) aus Plastikmaterial aufweist, die mit wenigstens einer Lasche mit wenigstens einer Einrastzunge ausgebildet ist, wobei die Zwischenplakette den Dornen entsprechende Löcher (24) aufweist.

3. Vorrichtung nach Anspruch 2, dadurch gekennzeichnet, daß die Löcher der Zwischenplakette auf der Achse der Laschen gebildet sind.

## Claims

1. Device for fixing plates (1, 19) onto a partition (2, 17), particularly logo plates or identification plates onto a cabinet or bodywork, these plates including at least one fixing pin (3, 20) penetrating into a corresponding hole (4, 24) of the partition, characterized by the fact that this pin is solid and rigid, and includes at the periphery of its base, fine longitudinal lugs (25 to 27) in a material which is harder than that of the partition.

2. Fixing device according to Claim 1, characterized by the fact that it includes an intermediate plate (21) made of plastic formed with at least one tab having at least one clip-in tongue, the intermediate plate including holes (24) corresponding to the said pins.

3. Device according to Claim 2, characterized by the fact that the holes in the intermediate plate are formed in the axis of the tabs.
